# EUROPÄISCHE PATENTSCHRIFT

(11) **EP 1 310 127 B1**
(45) Veröffentlichungstag und Bekanntmachung des Hinweises auf die Patenterteilung: **04.08.2010**
(21) Anmeldenummer: 01943029.7
(22) Anmeldetag: 05.05.2001
(51) Int. Cl.: H04W 24/00, G01R 31/28, G07C 5/08

(54) **VERFAHREN ZUR FERNDIAGNOSE UND ZENTRALEN FEHLERAUSWERTUNG VON DEZENTRALEN ELEKTRISCHEN GERÄTEN UND DEZENTRALES ELEKTRONISCHES GERÄT HIERZU**
REMOTE DIAGNOSIS AND CENTRAL FAULT EVALUATION METHOD OF DECENTRALIZED ELECTRIC DEVICES, AND DECENTRALIZED ELECTRONIC DEVICE
PROCEDE DE TELEDIAGNOSTIC ET D'EVALUATION D'ERREURS CENTRALISEE CONCERNANT DES APPAREILS ELECTRIQUES DECENTRALISES, ET APPAREIL ELECTRONIQUE DECENTRALISE

(30) Priorität: 09.08.2000 DE 10038764
(43) Veröffentlichungstag der Anmeldung: 14.05.2003
(73) Patentinhaber: ROBERT BOSCH GMBH, 70442 Stuttgart (DE)
(72) Erfinder: HERRMANN, Matthias, 31141 Hildesheim (DE)
(86) Internationale Anmeldenummer: PCT/DE2001/001730
(87) Internationale Veröffentlichungsnummer: WO 2002/013560

(56) Entgegenhaltungen:
- EP-A- 0 671 631
- EP-A- 0 730 388
- DE-A- 19 633 785
- FR-A- 2 757 664

## Beschreibung

Die Erfindung betrifft ein Verfahren zur Ferndiagnose und zentralen Fehlerauswertung von dezentralen elektrischen Geräten mit einer integrierten Telekommunikationseinrichtung. Sie betrifft weiterhin ein dezentrales elektronisches Gerät mit einer integrierten Telekommunikationseinrichtung.

Als dezentrale elektrische Geräte mit integrierter Telekommunikationseinrichtung sind zum Beispiel sogenannte Radiophones bekannt, die eine Kombination von Autoradio und GSM-Telefon in einem Gehäuse darstellen. Zudem sind vernetzte Fahrerinformationssysteme als Kombination von Navigationssystem und Mobiltelefon für den Einsatz in Kraftfahrzeugen bekannt.

Derartige Systeme sind sehr komplex und haben zahlreiche miteinander zusammenwirkende Funktionalitäten. Das Problem bei der Entwicklung und dem Betrieb solcher kombinierten elektrischen Geräte liegt darin, dass sie aufgrund ihrer Komplexität nicht vollständig im Labor erprobt werden können, sondern neue technische Probleme beim Einsatz im Feld auftreten können.

Herkömmlicherweise werden die auftretenden Fehler nur durch Reklamationen und Rückführung der reklamierten Geräte zu dem Hersteller bekannt und können dort nur eingeschränkt statistisch ausgewertet werden. Die statistische Basis für Fehlerauswertungen ist daher relativ schmal und die resultierenden Maßnahmen begrenzt. Zudem ist die Reaktionszeit zur Fehlerbehebung und zur entsprechenden Überarbeitung sämtlicher im Feld befindlicher elektrischen Geräte zu groß.

Aufgabe war es daher, ein verbessertes Verfahren zur Ferndiagnose und zur zentralen Fehlerauswertung von dezentralen elektrischen Geräten mit integrierter Telekommunikationseinrichtung sowie ein entsprechend verbessertes dezentrales elektrisches Gerät mit integrierter Telekommunikationseinrichtung zu schaffen.

EP-A-0730388 zeigt ein Mobiltelefon, welches mit einem Speicher ausgerüstet ist. Im Speicher ist ferner ein Diagnoseprogramm zur Selbstdiagnose des Mobiltelefons gespeichert. Die Selbstdiagnose beschränkt sich dabei auf eine Überprüfung, ob die Prozesse im Mobiltelefon korrekt ablaufen. Die im Speicher enthaltenen Daten können gesteuert durch die Steuereinheit ausgelesen werden. Ein vom Selbstdiagnoseprogramm erkannter Fehler wird angezeigt. Ferner wird im Speicher eine Log-Datei angelegt, welche den Betriebsverlauf des Mobiltelefons protokolliert. Auf der Basis dieser Protokolldatei findet eine weitere Diagnose des Mobiltelefons statt. Dabei ist ein Server vorgesehen, dessen Speichereinheit ebenfalls ein Diagnoseprogramm umfasst, welches die dem Server zugespielten Daten auf Fehler untersucht und das Ergebnis anzeigt. Dabei werden die Daten der Protokolldatei im Speicher des Mobiltelefons zum Server übertragen durch Benutzereingabe. Im Server wird dann die Protokolldatei auf fehlerhafte Abläufe untersucht. Dabei ist auch vorgesehen, dass die Diagnoseergebnisse zurück übertragen werden und auf dem Bildschirm des Mobiltelefons dargestellt werden.

Gemäß der EP-A-0671631 werden alle Fehlercodes übertragen.

Die Aufgabe wird durch das Verfahren mit den Schritten gemäß Anspruch 1 und durch die Vorrichtung gemäß Anspruch 4 gelöst.

Erfindungsgemäß werden somit die in einem Diagnosespeicher des elektrischen Gerätes abgespeicherten Informationen durch die integrierte Telekommunikationseinrichtung an eine zentrale Fehlerauswertestation übertragen und dort ausgewertet. Dies hat den Vorteil, dass prinzipiell für jedes im freien Feldeinsatz befindliches elektronisches Gerät eine Ferndiagnose durchgeführt werden kann und der Informationsweg von dem Nutzer des elektronischen Gerätes zur zentralen Fehlerauswertestation standardisiert und erheblich verkürzt wird. Die Informationen über die Fehler können dann zum Beispiel von der an die Fehlerauswertestation angeschlossene Entwicklungseinheit rasch analysiert und behoben werden.

Durch statistische Auswertung der Fehlerinformationen können Fehlerhäufungen frühzeitig erkannt werden. Zudem können die Kosten für Produkterprobungen und Reparaturen reduziert werden.

Vorzugsweise wird bei dem Verfahren eines oder mehrere in dem Diagnosespeicher gespeicherten Diagnoseprogramme ausgeführt und nur die Fehlerdaten aus dem Diagnosespeicher übertragen, die entsprechend durch das ausgeführte Diagnoseprogramm ausgewählt wurden. Durch den Einsatz von Diagnoseprogrammen können die Diagnosevorgänge standardisiert und für den Nutzer leicht bedienbar gemacht werden.

Vorzugsweise werden die Diagnoseergebnisse von der zentralen Fehlerauswertestation an das elektronische Gerät zurück übertragen. Auf diese Weise können die Kosten für Reparaturen reduziert und sofort auf eine Diagnoseanforderung reagiert werden. Dies führt zu einer Steigerung der Qualität des Produktes und zur erhöhten Kundenzufriedenheit.

Die Diagnoseergebnisse können in bekannter Weise in dem elektronischen Gerät angezeigt werden. Zudem kann eine Wartung des elektronischen Gerätes durch ein Diagnoseprogramm in Abhängigkeit von den Diagnoseergebnissen durchgeführt werden.

Ein dezentrales elektronisches Gerät mit integrierter Telekommunikationseinrichtung hat somit erfindungsgemäß einen Diagnosespeicher zum Speichern von Informationen über Fehlfunktionen des elektronischen Gerätes. Zur Durchführung des oben beschriebenen Verfahrens ist es so ausgebildet, dass gesteuert durch den Nutzer des elektrischen Gerätes eine Telekommunikationsverbindung mit der zentralen Fehlerauswertestation aufgebaut und Fehlerdaten aus dem Diagnosespeicher zur Auswertung an die zentrale Fehlerauswertestation übertragen werden. Durch den Nutzer gesteuerten Aufbau der Telekommunikationsverbindung behält der Benutzer die Kontrolle über die Ferndiagnose, so dass ein Zugriff auf das elektrische Gerät gegen den Willen des Nutzers nicht möglich ist.

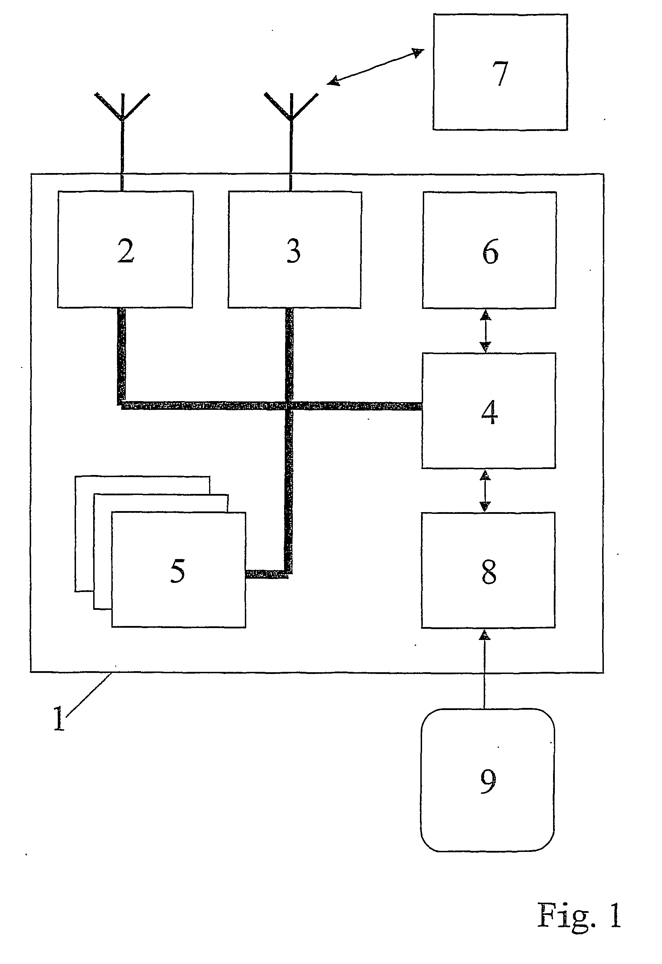

Die Erfindung wird nachfolgend mit einem Ausführungsbeispiel anhand der beigefügten Zeichnung näher erläutert. Es zeigt
- Figur 1 -: ein Blockdiagramm eines Ausführungsbeispiels für ein elek- tronisches Gerät 1 in Form eines sogenannten Radiophons, das heißt einem Autoradio mit integriertem Mobilfunkteil in einem Gehäuse.

Das elektronische Gerät 1 hat verschiedene Systemkomponenten, wie zum Beispiel einem AM/FM-Tuner 2, einer Telekommunikationseinrichtung 3 in Form eines Mobilfunkteils, eine Steuerung 4 sowie gegebenenfalls weitere Systemkomponenten 5. Erfindungsgemäß ist ein Diagnosespeicher 6 integriert, um dem Falle von Fehlfunktionen entsprechende Informationen als Fehlerdaten in dem Diagnosespeicher 6 abzulegen.

Das elektronische Gerät 1 ist so ausgebildet, das nutzergesteuert über das Mobilfunkteil 3 eine Telekommunikationsverbindung mit einer zentralen Fehlerauswertestation 7 hergestellt und Fehlerdaten aus dem Diagnosespeicher 6 an die zentrale Fehlerauswertestation 7 übertragen werden. Die Fehlerdaten werden dann in der zentralen Fehlerauswertestation 7 ausgewertet und gegebenenfalls werden Diagnoseergebnisse an das elektronische zurück übertragen. Sie können entweder in dem elektronischen Gerät 1 angezeigt und/oder zur Wartung des elektronischen Gerätes 1 verwendet werden.

Der Verbindungsaufbau und die Übertragung von Fehlerdaten aus dem Diagnosespeicher 6 wird vorzugsweise nur zu einer oder mehreren vordefinierten und durch den Benutzer nicht veränderbaren Rufnummern durchgeführt. Auf diese Weise ist das Verfahren zur Ferndiagnose einfach und sicher handhabbar und relativ manipulationssicher.

In dem dargestellten Ausführungsbeispiel ist weiterhin ein Kartenleser 8 vorgesehen, um spezielle Diagnoseprogramme auszuführen, die auf einer Diagnosekarte 9 abgespeichert sind. Die Diagnosekarte 9 dient zur Sicherung des Systems, wobei erst beim Einstecken der Diagnosekarte 9 in den Kartenleser 8 die Funktionen zum Aufbau einer Telekommunikationsverbindung mit der zentralen Fehlerauswertestation 7 sowie zur Durchführung verschiedener auf der Karte gespeicherter Diagnoseprogramme aktiviert werden. Es sind Diagnoseprogramme vorgesehen, die einer Auswahl von Bereichen des Diagnosespeichers 6, das heißt eine Auswahl der zu übertragenden und auszuwertenden Fehlerdaten, ermöglicht. Zudem ist eine Speicherung und das Anzeigen von Diagnoseergebnissen nur mittels eingesteckter Diagnosekarte 9 möglich. Ebenso kann eine Wartung des elektronischen Gerätes 1 in Abhängigkeit von den Diagnoseergebnissen nur in Verbindung mit der Diagnosekarte 9 und eines auf der Diagnosekarten 9 gespeicherten Diagnoseprogramms erfolgen.

Vorzugsweise ist die Diagnosekarte 9 anonymisiert, so dass eine Benutzeridentität, insbesondere bei der Übertragung der Fehlerdaten zur zentralen Fehlerauswertestation 7 nicht mitübermittelt wird. Hierdurch wird auch sichergestellt, dass zur statistischen Fehlerauswertung durch Speicherung der Fehlerdaten in der zentralen Fehlerauswertestation 7 keine personalisierten Daten miterfasst werden.

## Patentansprüche

1. Verfahren zur Ferndiagnose und zentralen Fehlerauswertung eines dezentralen elektronischen Geräts (1) mit einer integrierten Telekommunikationseinrichtung (3) mit den Schritten:
a) Abspeichern von Informationen über Fehlfunktionen als Fehlerdaten des dezentralen elektronischen Geräts (1) in einem Diagnosespeicher (6) des dezentralen elektronischen Geräts (1);
b) Ausführen eines oder mehrerer in dem Diagnosespeicher (6) oder auf einer Diagnosekarte (9) gespeicherten Diagnoseprogrammen, wobei das wenigstens eine Diagnoseprogramm eine Auswahl der im Diagnosespeicher gespeicherten und zu übertragenden und auszuwertenden Fehlerdaten vornimmt;
c) Aufbau einer Telekommunikationsverbindung des elektronischen Gerätes (1) mit einer zentralen Fehlerauswertestation (7) gesteuert durch den Nutzer des elektronischen Gerätes (1);
d) Übertragen nur der Fehlerdaten aus dem Diagnosespeicher (6), die durch das ausgeführte Diagnoseprogramm ausgewählt wurden, an die zentrale Fehlerauswertestation (7);
e) Auswerten der Fehlerdaten in der zentralen Fehlerauswertestation (7);
f) Empfangen von Diagnoseergebnissen durch das elektronische Gerät (1) von der zentralen Feblerauswertestation (7).

2. Verfahren nach Anspruch 1, **gekennzeichnet durch** das Anzeigen der Diagnoseergebnisse in dem dezentralen elektronischen Gerät (1).

3. Verfahren nach Anspruch 1 oder 2, **gekennzeichnet durch** eine Wartung des elektronischen Geräts (1) **durch** ein Diagnoseprogramm in Abhängigkeit von dem Diagnoseergebnis.

4. Dezentrales elektronisches Gerät (1) mit einer integrierten Telekommunikationseinrichtung (3), mit einem Diagnosespeicher (6) zum Speichern von Informationen über Fehlfunktionen als Fehlerdaten des dezentralen elektronischen Gerätes (1), mit wenigstens einem Diagnoseprogramm, das in dem Diagnosespeicher (6) oder in einer Diagnosekarte (9) abgespeichert ist, zum Auswählen von an die zentrale Fehlerauswertestation (7) zu übertragenden im Diagnosespeicher gespeicherten Fehlerdaten, wobei das elektronische Gerät (1) zum Aufbau einer Telekommunikationsverbindung des elektronischen Geräts (10) mit der zentralen Fehlerauswertestation (7) gesteuert durch den Nutzer des elektronischen Geräts (1) ausgebildet ist, wobei das elektronische Gerät (1) das wenigstens eine im dem Diagnosespeicher (6) gespeicherte Diagnoseprogramm ausführt oder von der Diagnosekarte (9) liest und ausführt, dass das elektronische Gerät (1) zum Übertragen von nur der Fehlerdaten aus dem Diagnosespeicher (6) an die zentrale Fehlerauswertestation (7), die von dem wenigstens einen Diagnoseprogramm ausgewählt wurden und zum Empfangen von Diagnoseergebnissen durch das elektronische Gerät (1) von der zentralen Fehlerauswertestation (7) ausgebildet ist.

5. Dezentrales elektronisches Gerät (1) nach Anspruch 4, **dadurch gekennzeichnet, dass** das Diagnoseprogramm zur Wartung des elektronischen Geräts (1) in Abhängigkeit von den Diagnoseergebnissen ausgebildet ist.

6. Dezentrales elektronisches Gerät (1) nach Anspruch 4 oder 5, **gekennzeichnet durch** einen Kartenleser (8) zum Auslesen des wenigstens eines Diagnoseprogramms aus der Diagnosekarte (9)

## Claims

1. Method for remote diagnosis and central error evaluation for a distributed electronic appliance (1) with an integrated telecommunication device (3), having the following steps:
a) information about malfunctions is stored as error data for the distributed electronic appliance (1) in a diagnosis memory (6) of the distributed electronic appliance (1);
b) one or more diagnosis programs stored in the diagnosis memory (6) or on a diagnosis card (9) is/are executed, wherein the at least one diagnosis program selects the error data which are stored in the diagnosis memory and which need to be transmitted and evaluated;
c) a telecommunication link between the electronic appliance (1) and a central error evaluation station (7) is set up under the control of the user of the electronic appliance (1);
d) only the error data from the diagnosis memory (6) which have been selected by the executed diagnosis program are transmitted to the central error evaluation station (7);
e) the error data are evaluated in the central error evaluation station (7);
f) diagnosis results are received by the electronic appliance (1) from the central error evaluation station (7).

2. Method according to Claim 1, **characterized by** the display of the diagnosis results in the distributed electronic appliance (1).

3. Method according to Claim 1 or 2, **characterized by** maintenance of the electronic appliance (1) by a diagnosis program on the basis of the diagnosis result.

4. Distributed electronic appliance (1) having an integrated telecommunication device (3), having a diagnosis memory (6) for the storage of information about malfunctions as error data for the distributed electronic appliance (1), having at least one diagnosis program, which is stored in the diagnosis memory (6) or in a diagnosis card (9), for selecting error data which need to be transmitted to the central error evaluation station (7) and which are stored in the diagnosis memory, wherein the electronic appliance (1) is designed for the setup of a telecommunication link between the electronic appliance (1) and the central error evaluation station (7) under the control of the user of the electronic appliance (1), wherein the electronic appliance (1) executes the at least one diagnosis program stored in the diagnosis memory (6) or reads and executes it from the diagnosis card (9), **characterized in that** the electronic appliance (1) is designed for the transmission of only the error data from the diagnosis memory (6) to the central error evaluation station (7) which have been selected by the at least one diagnosis program and for the reception of diagnosis results by the electronic appliance (1) from the central error evaluation station (7).

5. Distributed electronic appliance (1) according to Claim 4, **characterized in that** the diagnosis program is designed for maintenance of the electronic appliance (1) on the basis of the diagnosis results.

6. Distributed electronic appliance (1) according to Claim 4 or 5, **characterized by** a card reader (8) for reading the at least one diagnosis program from the diagnosis card (9).

## Revendications

1. Procédé de diagnostic à distance et d'évaluation centrale des défauts d'un appareil électronique décentralisé (1) auquel est intégré un dispositif de télécommunication (3), le procédé présentant les étapes qui consistent à :
a) conserver des informations sur des défauts de fonctionnement en tant que données de défauts de l'appareil électronique décentralisé (1) dans une mémoire de diagnostic (6) de l'appareil électronique décentralisé (1),
b) exécuter un ou plusieurs programmes de diagnostic conservés dans la mémoire de diagnostic (6) ou sur une carte de diagnostic (9), le ou les programmes de diagnostic effectuant une sélection des données d'erreur conservées dans la mémoire de diagnostic et à transmettre et évaluer,
c) établir une liaison de télécommunication entre l'appareil électronique (1) et un poste central (7) d'évaluation des erreurs sous la commande de l'utilisateur de l'appareil électronique (1),
d) transmettre au poste central (7) d'évaluation des défauts uniquement les données de défaut de la mémoire de diagnostic (6) qui ont été sélectionnées par le programme de diagnostic exécuté,
e) évaluer les données de défaut dans le poste central (7) d'évaluation des défauts et
f) recevoir les résultats du diagnostic par l'appareil électronique (1) en provenance du poste central (7) d'évaluation des défauts.

2. Procédé selon la revendication 1, **caractérisé par** l'affichage des résultats de diagnostic sur l'appareil électronique décentralisé (1).

3. Procédé selon les revendications 1 ou 2, **caractérisé par** la maintenance de l'appareil électronique (1) par un programme de diagnostic en fonction du résultat du diagnostic.

4. Appareil électronique décentralisé (1) auquel est intégré un dispositif de télécommunication (3) et qui présente
une mémoire de diagnostic (6) qui conserve des informations sur des fonctions défectueuses sous la forme de données de défauts de l'appareil électronique décentralisé (1),
au moins un programme de diagnostic qui est conservé dans la mémoire de diagnostic (6) ou sur une carte de diagnostic (9) et qui sélectionne des données de défauts conservées dans la mémoire de diagnostic et à transmettre au poste central (7) d'évaluation des défauts,
l'appareil électronique (1) étant configuré pour établir une liaison de télécommunication entre l'appareil électronique (1) et le poste central (7) d'évaluation de défauts sous la commande de l'utilisateur de l'appareil électronique (1),
l'appareil électronique (1) exécutant un ou plusieurs programmes de diagnostic conservés dans la mémoire de diagnostic (6) ou lisant ou exécutant ce ou ces programmes de diagnostic sur la carte de diagnostic (9),
l'appareil électronique (1) étant configuré pour transmettre au poste central (7) d'évaluation de défauts uniquement les données de défauts de la mémoire de diagnostic (6) qui ont été sélectionnées par le ou les programmes de diagnostic et pour recevoir des résultats de diagnostic par l'appareil électronique (1) en provenance du poste central (7) d'évaluation des défauts.

5. Appareil électronique décentralisé (1) selon la revendication 4, **caractérisé en ce que** le programme de diagnostic est configuré pour assurer la maintenance de l'appareil électronique (1) en fonction des résultats de diagnostic.

6. Appareil électronique décentralisé (1) selon les revendications 4 ou 5, **caractérisé par** un lecteur de cartes (8) qui lit le ou les programmes de diagnostic sur la carte de diagnostic (9).
